Europäisches Patentamt

European Patent Office

Office européen des brevets

(11) Publication number: **0 438 831 B1**

## EUROPEAN PATENT SPECIFICATION

(45) Date of publication of patent specification: **02.08.95**    (51) Int. Cl.⁶: **C08J 5/12**, //C08L23:06

(21) Application number: **90203465.1**

(22) Date of filing: **21.12.90**

(54) **Process for the mutual adhesion of layers of ultra-high molecular weight polyethylene.**

(30) Priority: **29.12.89 NL 8903178**

(43) Date of publication of application:
**31.07.91 Bulletin 91/31**

(45) Publication of the grant of the patent:
**02.08.95 Bulletin 95/31**

(84) Designated Contracting States:
**AT BE CH DE DK ES FR GB GR IT LI NL SE**

(56) References cited:
**EP-A- 0 141 418**
**EP-A- 0 223 252**

**DATABASE WPIL, accession 78-61464A [34], Derwent Publications Ltd, London, GB;& JP-A-53 082 882**

**DATABASE WPIL, accession no. 88-081164 [12], Derwent Publications Ltd, London,GB; & JP-A-63 034 120**

**DATABASE WPIL, accession no. 017277 [03], Derwent Publications Ltd, London, GB;& JP-A-61 274 197**

(73) Proprietor: **DSM N.V.**
**Het Overloon 1**
**NL-6411 TE Heerlen (NL)**

(72) Inventor: **Van der Zande, Harold Dick**
**Bachstrasse 29**
**NL-6438 KK Oirsbeek (NL)**
Inventor: **Nelissen, Gertruda Pascal Petronella**
**Haverterpoort 2**
**NL-6118 CE Susteren (NL)**

## Description

The invention relates to a process for the mutual adhesion of layers of ultra-high molecular weight polyethylene at a temperature above the melting point of the polyethylene.

Such a process is known from the Japanese patent publication JP-A-53/82882, in which a tubular article consisting of ultra-high molecular weight polyethylene is produced by winding round a mandrel layers of polyethylene film partly overlapping each other and by subsequently fusing together the overlapping and thus adjoining polyethylene surfaces at a temperature above the melting point of the polyethylene.

A disadvantage of this process is the long period of time, 20-100 minutes, during which the polyethylene layers to be bonded must be kept at the said temperature above the melting point in order to obtain a sufficiently strong adhesion between the adjoining polyethylene surfaces. These long periods of time are not only a disadvantage for an economically acceptable process operation, but such a long heating process also causes a thermal degradation of the polyethylene, resulting in an unacceptable degree of deterioration of the properties thereof.

The object of the invention is to provide a process in which layers of ultra-high molecular weight polyethylene can be bonded together in a shorter period of time than possible so far.

This object is achieved according to the invention in that each polyethylene layer is obtained by clearing a layer of polyethylene gel of solvent.

It has been found that in this way it is possible in a much shorter adhesion time to obtain an adhesion between layers of ultra-high molecular weight polyethylene which is as good as can be reached in the known process, while by applying the same adhesion temperatures and the same adhesion times the process according to the invention results in a substantially better adhesion between the polyethylene layers than in the known process.

A further advantage of the process according to the invention is that the layer of polyethylene gel can be obtained in very small thicknesses, but may further vary also within wide limits, for instance from 1 $\mu$m to 5 mm, so that the various requirements that may be imposed by various applications in respect of the thickness of the polyethylene layer can be complied with.

The invention is not limited to the adhesion of layers that have been brought into contact with each other by the overlapping winding process described above, but it can be applied also if the polyethylene layers to be bonded have been brought into contact with each other in a different way, for instance by folding or stacking. Nor is the invention limited to tubular articles, but it can be used with equally good results in other cases in which polyethylene layers must be subjected to mutual adhesion such as, for instance, in the production of laminates or other articles to be produced by the whole or partial mutual adhesion of polyethylene layers.

Wherever in this specification reference is made to adjoining surfaces, surfaces must be understood to mean both separate layers or parts thereof and parts of one and the same polyethylene layer overlapping each other.

Articles obtained by applying the process according to the invention can be used per se, but they can be used also as coatings of articles from materials other than ultra-high molecular weight polyethylene and articles of various shapes.

The adhesion to articles of other materials may be achieved according to techniques known per se, for instance while applying adhesives, or direct in one or more process steps combined with the mutual adhesion of the polyethylene layers by heating and compressing the surfaces to be subjected to the adhesion.

In the process according to the invention the ultra-high molecular weight linear polyethylene used, hereinafter referred to as UHMWPE, has a weight-average molecular weight of at least 0.5 x $10^6$ kg/kmole and preferably at least 1 x $10^6$ kg/kmole.

The weight-average molecular weight of UHMWPE is determined by applying the processes known for this purpose, such as Gel Permeation Chromatography and Light Scattering, or calculated on the basis of the Intrinsic Viscosity (IV) determined in decalin at 135°C. The said weight-average molecular weights of 0.5 and 1.0 x $10^6$ kg/kmole correspond with an IV in decalin at 135°C of 5.1, respectively 8.5 dl/g according to the empirical equation of

$$M_w = 5.37 \times 10^4 \, [IV]^{1.37} .$$

UHMWPE is understood in this connection to mean linear polyethylene with fewer than 1 side chain per 100 carbon atoms and preferably fewer than 1 side chain per 300 carbon atoms and such a polyethylene capable of containing also minor amounts, preferably less than 5 moles %, of one or more other alkenes

2

copolymerized with it, such as propylene, butylene, pentene, hexene, 4-methyl pentene, octene, etc., which polyethylene or copolymer of ethylene has a weight-average molecular weight of at least $0.5 \times 10^6$ kg/kmole.

The polyethylene may further contain minor amounts, preferably 25% (wt) at most, of one or more other polymers, particularly an alkene-1 polymer, such as polypropylene, polybutadiene or a copolymer of propylene with a minor amount of ethylene.

Such an UHMWPE can be produced by means of, for instance, a Ziegler or a Phillips process while applying suitable catalysts and under polymerization conditions known in the art.

UHMWPE has a number of properties which make it possible for articles produced thereof to be used for many purposes and in diverse environments. Such properties are in particular, for instance, the high wear resistance, impact resistance, the high resistance against chemicals and the low coefficient of friction.

The polyethylene layer to be subjected to adhesion is obtained by clearing a layer of polyethylene gel of solvent.

Processes for obtaining such a layer of UHMWPE gel are known per se from GB-A-2.164.897, EP-A-64.167 and EP-A-141.418, in which processes are described for obtaining a film-shaped UHMWPE gel by extruding or casting a diluted UHMWPE solution in the desired shape, followed by the rapid cooling of the resulting film-shaped article consisting of the solution, in which process a film-shaped layer of UHMWPE gel is formed, hereinafter referred to as gel film.

This gel film, obtainable as intermediate product in the said processes, is highly suited to be used after drying as polyethylene layer in the process according to the invention.

In that case the gel film preferably has a thickness of between 0.1 and 10 mm, particularly between 0.5 and 3 mm. In conjunction with the concentration of the polyethylene in the solution used, this thickness is so chosen that the thickness of the final dried gel film is between 0.05 and 5 mm, preferably between 0.1 and 2 mm.

In the said processes, the UHMWPE concentrations in the solutions from which the layers of polyethylene gel are formed are between 0.5 and 40% (wt). Solutions with a concentration of more than 40% (wt) are more difficult to handle because of their high viscosity, particularly with high molecular weights, but within the scope of the process according to the invention it is, however, also possible to use layers of polyethylene gel formed from solutions with an UHMWPE concentration of up to about 60% (wt) or higher.

According to the said known processes the solvent is removed by evaporation, by compressing the gel film or by passing the gel film through a liquid bath containing an extractant for the solvent, upon which the gel film, having been cleared of solvent, is dried.

From the said known processes it is known also how to produce thinner polyethylene layers, to about 1 μm, by stretching the gel film before or during the removal of the solvent, or the dried gel film after removal of the solvent, into at least one direction. Such stretched films, too, can be used as UHMWPE in the process according to the invention.

Direct or stretched under the above-mentioned conditions, porous UHMWPE layers, too, can be used in all sorts of thicknesses as polyethylene layers to be subjected to adhesion in the process according to the invention. Processes for obtaining a porous film-shaped polyethylene layer from a gel film are known per se, for instance from European patent application EP-A- 160.551.

Such a wide variety of obtainable thicknesses of the polyethylene layer cannot, or only with great difficulty, be realized in a different way, for instance via ram extrusion, by the compression of UHMWPE powder above the melting point of the polyethylene or by peeling off a thin layer from an article obtained by ram extrusion or compression, and then always at high production costs.

The mechanical properties of an UHMWPE layer obtained from a gel film by the removal of the solvent have been found to differ from those of a layer obtained via a different route, for instance ram extrusion or the moulding of a normally obtainable UHMWPE powder above the melting point of the polyethylene.

Although the polyethylene layers obtained from a gel are highly brittle and therefore do not seem to be suited for the production of tubular and other articles or for the use as coating, it has, however, surprisingly been found that after the adhesion process the polyethylene layer again possesses the normal toughness and the other said excellent mechanical and chemical properties characteristic of UHMWPE. It has further been found that in the process according to the invention a very strong mutual adhesion takes place between the adjoining polyethylene surfaces and it has, moreover, been found that at these places the polyethylene has so flowed out as to become almost perfectly flat and smooth.

An important step in the process according to the invention is the mutual adhesion of the adjoining surfaces of polyethylene layers. This adhesion process must take place at a temperature above the melting point of the polyethylene and under enough pressure.

In order to obtain a proper adhesion of the adjoining polyethylene surfaces the process conditions are as follows.

The temperature must be above the melting point of the polyethylene used, but must, however, be chosen as low as possible, preferably lower than about 160°C and with special preference lower than about 150°C, in order to minimize a thermal degradation of the polyethylene. Generally, the melting point of polyethylene with a Mw higher than $0.5 \times 10^6$ kg/kmole is between about 130°C and 140°C. The pressure may range from 0.2 to 10 MPa, preferably from 0.4 to 1 MPa. The maximum period of time during which these conditions may be maintained is 15 minutes, and is preferably between 30 and 600 seconds and most preferably between 60 and 400 seconds, depending on the thickness of the polyethylene layer used and on the temperature applied.

When under these process conditions the adhesion temperature is lowered, while the thickness remains the same, the required adhesion time will increase. The combination of adhesion temperature and adhesion time is critical only in so far that thermal degradation of the polyethylene must be minimized. The permissible limits can easily be defined by experiment by the average person skilled in the art.

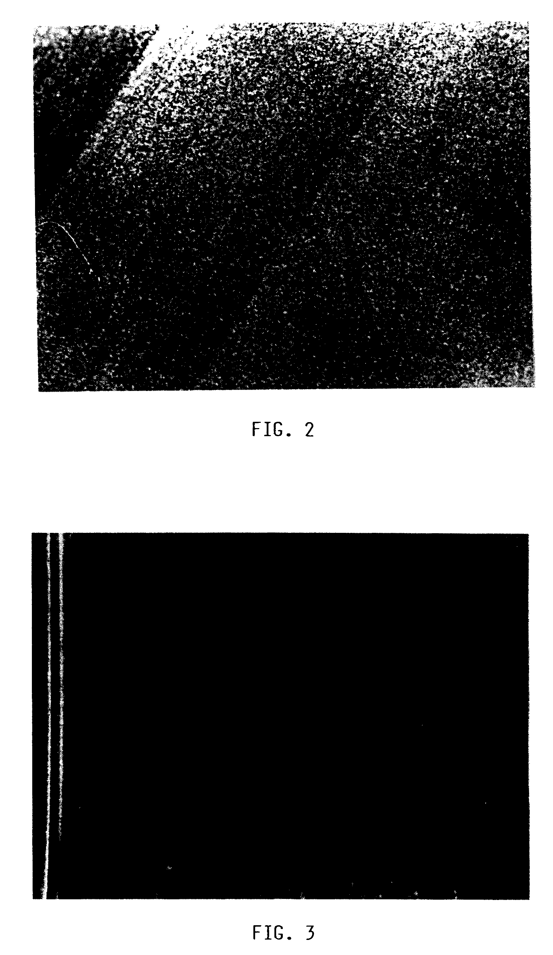

The morphology of the polyethylene in the article obtained after the adhesion process according to the invention has been found to differ from that obtained by applying the known process. The fact is that by applying transmitted light microscopy it has been revealed that the bonded polyethylene layers according to the invention have a homogeneous structure, unlike the bonded polyethylene layers known in the art, which show a clear powder morpholgy. The same difference in morphology is apparent on the surface of the polyethylene layer once it has been made to swell in a solvent. This difference is visualized in figs. 2 and 3, which show the surface of a cross section of a layer of polyethylene, obtained by clearing a gel layer of solvent (fig. 2) and of a layer of melt-crystallized polyethylene (fig. 3). Fig. 2 shows a homogeneous structure and no grain boundaries are visible. In fig. 3 the grain boundaries are clearly visible. The polyethylene layers have been obtained by the processes as described in Examples I-VI and Comparative Examples A-E respectively. The pictures have been obtained by transmitted light microscopy with a polarization microscope at a magnification of 160 x.

In the process according to the invention, it is possible also to apply, between the polyethylene layers to be subjected to the adhesion process, components that improve the strength and the rigidity such as, for instance, fibres of suitable materials the melting point of which is above that of the polyethylene layers. In order to obtain a proper adhesion between the polyethylene layers, the structure of such a fibrous layer must, however, be so open and be of such a thickness that in the adhesion process a substantial part of the surfaces of the polyethylene layers to be subjected to the adhesion will be in direct contact with each other and not be separated by fibres in between.

The fibre structure therefore preferably consists for at least 25% and most preferably for at least 50% of its surface of continuous openings between the fibres. It is of particular advantage if the fibre used in the fibre structure is stretched high-molecular polyethylene of which the melting point is at least 3°C higher than that of the polyethylene layers to be bonded and the chosen adhesion temperature applied is below the melting point of the polyethylene fibres, but, as required for the process according to the invention, above the melting point of the polyethylene layers. These stretched fibres can be obtained according to processes known per se, as described, for instance, in patent applications GB-2.042.414 and GB-2.051.667, and they have a very high modulus of elasticity and breaking strength. Thus, on the one side, an excellent adhesion is obtained between the polyethylene layers, while, on the other, the excellent properties of the stretched polyethylene fibres, such as the high breaking strength and the high modulus, are retained.

The process according to the invention may be applied, for instance, in the production of polyethylene pipes with or without fibre reinforcement, of wear-resistant and chemicals-resistant coatings and, taking advantage of the bio-compatibility of polyethylene, of prostheses applicable in the human body.

The invention is elucidated by means of the following examples without, however, being limited thereto.

The peel strength values have been determined by the 180° peeling test according to DIN standard 53530 on test specimens 12.5 mm wide and 100 mm long at a peeling rate of 100 mm per minute.

Example I

A linear polyethylene having an IV of 15.5 dl/gr in decalin at 135°C, corresponding with a weight-average molecular weight of $2.2 \times 10^6$ kg/kmole (Himont 312$^R$), was dissolved in decalin to a concentration of 20% (wt) to form a homogeneous solution by extruding such a mixture of polyethylene and decalin at a temperature of 180°C using a twin-screw extruder. The melting point of the polyethylene is about 136°C. The extruder head was provided with a die with a 2-mm-high extrusion slit, through which the solution was extruded to form a tape, which was cooled in a water bath kept at 20°C, in which process a gel film was formed. The gel film thus obtained was cleared of decalin by evaporation in an air oven until no residual decalin content could be measured any more.

Of the dried gel film, whose thickness was about 1 mm, test specimens were cut measuring 250 x 12.5 mm. In a flat press, 2 of these test specimens were laid one on top of the other.

This stacked structure of a total thickness of about 2 mm was subsequently kept in the flat press for 6 minutes under a pressure of 0.6 MPa and at a temperature of 140°C, at which pressure and temperature the layers of dried gel film were bonded to each other direct. The resulting laminate was subsequently cooled. The effective bonding time in this case is 4.5 minutes since from the moment the heating is switched on it takes 1.5 minutes before the surfaces to be bonded have got the intended temperature.

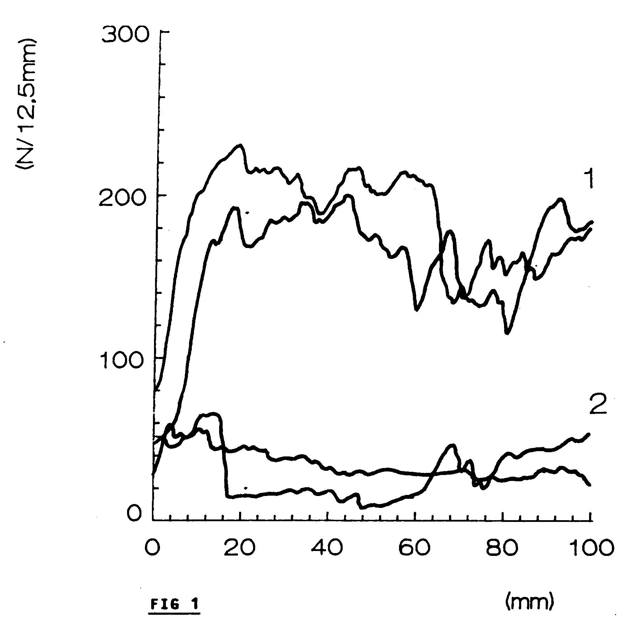

The cooled laminate was subjected to a 180° peeling test according to DIN standard 53530, in which the force required to separate the bonded polyethylene layers was recorded as a function of the displacement of the clamps. The results are shown in figure 1 with the curves marked '1', the clamp displacement in mm having been plotted along the horizontal axis and the peeling strength in N/12.5 mm along the vertical axis.

From figure 1 it may be concluded that the force required to separate the polyethylene layers from each other is 150-200 N.

Comparative Example A

As a comparative example the above procedure was repeated, the difference being that, instead of a dried gel film, a layer of melt-crystallized UHMWPE was used as the UHMWPE layer on which to determine the adhesive strength on itself. This layer was produced by compressing in a flat press at a temperature of 200°C, so well above the melting press at a temperature of 200°C, so well above the melting point of polyethylene, the same UHMWPE as in Example I, first for 2 minutes under a pressure of 0.1 MPa and successively for 5 minutes under a pressure of 10 MPa. The chosen amount of UHMWPE was such that the resulting UHMWPE film was about 2 mm thick.

As at this temperature degradation of the polyethylene occurs on the surface of the layer, one side of the layer was milled off to a depth of about 1 mm.

Subsequently, in a flat press, 2 layers of the 1-mm-thick milled compressed UHMWPE film were placed with the milled surfaces facing each other, upon which in the same manner as described in Example I a laminate of the dimensions specified there was formed from the approximately 2-mm-thick structure.

This laminate was subsequently subjected to the 180° peeling test according to DIN standard 53530, in which test the UHMWPE layers were separated from each other. The results of this test are shown in figure 1 as curves '2'.

Fig. 1 shows that the force required to separate the melt-crystallized polyethylene layers from each other is a factor 3 to 4 smaller than that required for separating the two layers of dried gel film from Example I, while the mutual adhesion of these layers has taken place under the same conditions.

Example II

With the same procedure as described in Example I a series of laminates was produced each with a different combination of bonding temperature and effective bonding time. The maximum peel strength was determined with the 180° peeling test according to DIN 53530. The results are presented in Table 1. In all cases a strong bonding was obtained in less than 15 minutes and at a temperature below 150°C. The relation between the bonding temperature and the required bonding time is clearly visible in the results.

Table 1

| Maximum peel strength (N/12.5 mm) | | | | |
|---|---|---|---|---|
| Effective bonding time (minutes) | 0.5 | 1.5 | 4.5 | 13.5 |
| Bonding temperature (°C) | | | | |
| 136 | 0 | 20 | 80 | 210 |
| 138 | 25 | 80 | 290* | - |
| 140 | 80 | 275* | - | - |
| 145 | 300* | - | - | - |
| - : experiment not conducted. | | | | |

\* Bonding stronger than single layer, resulting in layer failure instead of peeling off.

Comparative Example B

The procedure of Comparative Example A was repeated, the difference being that the bonding temperature and time were varied. The maximum peel strength for a series of laminates prepared with different combinations of bonding time and temperature are shown in Table 2. On comparison with Table 1 it can be noted that at temperatures below 150°C no satisfactory bonding can be achieved within 13.5 minutes. It also appears that under the conditions, where the bonding between two layers of polyethylene gel film is stronger than 200 N/12.5 mm and in most cases even stronger than the single gel films, no bonding at all can be achieved between two melt crystallized layers of polyethylene.

Table 2

| Maximum peel strength (N/12.5 mm) | | | | |
|---|---|---|---|---|
| Effective bonding time (minutes) | 0.5 | 1.5 | 4.5 | 13.5 |
| Bonding temperature (°C) | | | | |
| 136 | - | - | - | - |
| 138 | - | - | 0 | 0 |
| 140 | - | 0 | 30 | 10 |
| 145 | - | 0 | 20 | - |
| 149 | - | 25 | 35 | 45 |
| 154 | 150 | 210 | 210 | - |
| - : experiment not conducted. | | | | |

**Claims**

1. Process for the mutual adhesion of layers of polyethylene at a temperature above the melting point of the polyethylene, characterized in that the polyethylene has a weight-average molecular weight of at least $0.5 \times 10^6$ kg/kmole (calculation based on the intrinsic viscosity measured in decalin at 135°C) and in that polyethylene layers obtained by clearing a layer of polyethylene gel of solvent are mutually adhered by applying a pressure of between 0.2 and 10 MPa at a temperature of between the melting point of the polyethylene and 160 °C for a time of less than 15 minutes.

2. Process according to claim 1, characterized in that the weight-average molecular weight is at least $1.0 \times 10^6$ kg/kmole.

3. Process according to any one of claims 1-2, characterized in that the adhesion time is between 30 and 600 seconds and the adhesion temperature is 150°C at most.

6

4. Process according to any one of claims 1-3, characterized in that the adhesion time is between 60 and 400 seconds.

5. Process according to any one of claims 1-4, characterized in that between the layers of polyethylene to be subjected to the adhesion process a fibre structure is applied of which the surface consists for at least 25% of continuous openings between the fibres and of which the melting temperature of the fibres is above the melting temperature of the polyethylene.

6. Process according to claim 5, characterized in that the fibre structure consists for at least 50% of continuous openings between the fibres.

7. Process according to claim 5 or 6, characterized in that the fibre structure consists of fibres of stretched polyethylene having a weight-average molecular weight of at least $0.5 \times 10^6$ kg/kmole the melting temperature of which is at least $3°C$ higher than the melting temperature of the polyethylene layers to be subjected to the adhesion process.

**Patentansprüche**

1. Verfahren zur gegenseitigen Haftung von Polyethylen-Schichten bei einer Temperatur über dem Schmelzpunkt des Polyethylens, dadurch gekennzeichnet, daß das Polyethylen eine massenmittlere Molmasse von zumindest $0,5 \times 10^6$ kg/kmol (bezogen auf die Grenzviskosität, gemessen in Decalin bei $135°C$) aufweist, und daß die Polyethylen-Schichten, die durch das Klären einer Polyethylen-Gelschicht von Lösungsmittel erhalten wurden, zum Haften aneinander gebracht werden, indem ein Druck zwischen 0,2 und 10 MPa bei einer Temperatur zwischen dem Schmelzpunkt des Polyethylens und $160°C$ während einer Zeit von weniger als 15 Minuten ausgeübt wird.

2. Verfahren nach Anspruch 1, dadurch gekennzeichnet, daß die massenmittlere Molmasse zumindest $1,0 \times 10^6$ kg/kmol beträgt.

3. Verfahren nach einem der Ansprüche 1 und 2, dadurch gekennzeichnet, daß die Haftzeit zwischen 30 und 600 Sekunden beträgt, und die Hafttemperatur höchstens $150°C$ beträgt.

4. Verfahren nach einem der Ansprüche 1 bis 3, dadurch gekennzeichnet, daß die Haftzeit zwischen 60 und 400 Sekunden beträgt.

5. Verfahren nach einem der Ansprüche 1 bis 4, dadurch gekennzeichnet, daß zwischen den Polyethylen-Schichten, die dem Haftverfahren auszusetzen sind, eine Faserstruktur aufgebracht wird, deren Oberfläche zu zumindest 25 % aus kontinuierlichen Öffnungen zwischen den Fasern besteht, und deren Faser-Schmelztemperatur über dem Schmelzpunkt des Polyethylens liegt.

6. Verfahren nach Anspruch 5, dadurch gekennzeichnet, daß die Faserstruktur zu zumindest 50 % aus kontinuierlichen Öffnungen zwischen den Fasern besteht.

7. Verfahren nach Anspruch 5 oder 6, dadurch gekennzeichnet, daß die Faserstruktur aus Fasern von gestrecktem Polyethylen mit einer massenmittleren Molmasse von zumindest $0,5 \times 10^6$ kg/kmol besteht, deren Schmelztemperatur zumindest $3°C$ höher ist als die Schmelztemperatur der Polyethylen-Schichten, die dem Haftverfahren auszusetzen sind.

**Revendications**

1. Procédé pour l'adhérence mutuelle de couches de polyéthylène à une température au-dessus du point de fusion du polyéthylène, caractérisé en ce que le polyéthylène possède une masse moléculaire moyenne d'au moins $0,5 \times 10^6$ kg/kmole (calcul basé sur la viscosité intrinsèque mesurée dans de la décaline à $135°C$) et en ce que les couches de polyéthylène obtenues en éliminant le solvant d'une couche de gel de polyéthylène adhèrent mutuellement en appliquant une pression comprise entre 0,2 et 10 MPa à une température entre le point de fusion du polyéthylène et $160°C$ pendant une durée inférieure à 15 minutes.

**2.** Procédé selon la revendication 1, caractérisé en ce que la masse moléculaire moyenne en masse est d'au moins $1,0 \times 10^6$ kg/kmole.

**3.** Procédé selon l'une quelconque des revendications 1 et 2, caractérisé en ce que le temps d'adhérence est compris entre 30 et 600 secondes et la température d'adhérence est de 150°C au plus.

**4.** Procédé selon l'une quelconque des revendications 1 à 3, caractérisé en ce que le temps d'adhérence est compris entre 60 et 400 secondes.

**5.** Procédé selon l'une quelconque des revendications 1 à 4, caractérisé en ce qu'entre les couches de polyéthylène à soumettre au procédé d'adhérence on applique une structure fibreuse dont la surface est constituée d'au moins 25% d'ouvertures continues entre les libres et dont la température de fusion des libres est supérieure à la température de fusion du polyéthylène.

**6.** Procédé selon la revendication 5, caractérisé en ce que la structure fibreuse est constituée d'au moins 50% d'ouvertures continues entre les fibres.

**7.** Procédé selon la revendication 5 ou 6, caractérisé en ce que la structure fibreuse est constituée de fibres de polyéthylène étiré ayant une masse moléculaire moyenne en masse d'au moins $0,5 \times 10^6$ kg/kmole dont la température de fusion est plus élevée d'au moins 3°C que la température de fusion des couches de polyéthylène à soumettre au procédé d'adhérence.

**FIG 1**

FIG. 2

FIG. 3